# EUROPEAN PATENT SPECIFICATION

(11) **EP 3 721 068 B1**
(45) Date of publication and mention of the grant of the patent: **14.10.2026**
(21) Application number: 18752663.7
(22) Date of filing: 12.07.2018
(51) Int. Cl.: F02K 7/00, F02C 7/04

(54) **FLIGHT VEHICLE AIR BREATHING ENGINE WITH ISOLATOR CONTAINING FLOW DIVERTING RAMPS**
LUFTATMENDES TRIEBWERK EINES FLUGKÖRPERS MIT EINEM ÜBERSCHALLDIFFUSOR UND IN DIESEM DIFFUSOR SICH BEFINDENDEN STRÖMUNGSABLENKUNGSRAMPEN
MOTEUR AÉROBIE POUR AÉRONEF AVEC ISOLATEUR COMPRENANT DES RAMPES DE DÉRIVATION DE FLUX

(30) Priority: 06.12.2017 US 201715833526
(43) Date of publication of application: 14.10.2020
(73) Proprietor: Raytheon Company, Waltham, MA 02451 (US)
(72) Inventor: CICCHINI, Nicholas, P., Vail AZ 85641-6681 (US)
(74) Representative: Crowell & Moring U.K. LLP
(86) International application number: PCT/US2018/041754
(87) International publication number: WO 2019/112649

(56) References cited:
- GB-A- 911 074
- RU-C1- 2 343 297
- US-A1- 2008 060 361
- US-A1- 2012 325 325
- US-A1- 2014 182 697
- US-B1- 9 447 731
- GOUNKO YU P ET AL: "Supersonic flow over paired compression wedges of different sweep installed on the pre-compression surface", THERMOPHYSICS AND AEROMECHANICS, KUTATELADZE INSTITUTE OF THERMOPHYSICS SB RAS, NOVOSIBIRSK, vol. 22, no. 1, 7 May 2015 (2015-05-07), pages 1 - 15, XP035498498, ISSN: 0869-8643, [retrieved on 20150507], DOI: 10.1134/S0869864315010011

## Description

### FIELD OF THE INVENTION

The invention is in the field of engines for flight vehicles such as airplanes, missiles, projectiles or access-to-space systems.

### DESCRIPTION OF THE RELATED ART

Supersonic and hypersonic air-breathing engines, such as dual-mode ramjets/scramjets, include isolators. The isolator is typically a constant-area or slightly-monotonically-increasing area section located downstream of an air inlet throat, between the inlet and an engine/combustor. The purposes for the isolator may be to separate fluctuations between conditions in the inlet and the combustor, to provide a desired flow profile to the combustor, to reduce problems with inlet unstart and/or combustion stability. The isolator may also provide additional pressure rise upstream of the combustor when the combustor demands it.

Isolators can have shock systems set up along their lengths. The resulting shock train can create pressure rises that match those demanded by the combustor. This pressure rise must not allow pressure communications to travel through the isolator boundary layer and upstream past the inlet throat or allow the shock train to extend upstream of the inlet throat, both potentially resulting in unstart of the inlet. The isolator removes dynamic cross-talk between fluctuations in the inlet or combustor that can result in inlet unstart or engine flame-out/stall. Strong shock-boundary layer interactions can occur within the isolator, especially on the body-side of a vehicle where the boundary layer is thickest and has a more depleted energy profile. These strong shock interactions with weak boundary layers can result in lower pressure-rise capability and/ or high distortion of the flow profile (mass flux, Mach Number, total pressure, etc.) at the isolator exit, which will be ingested by the engine and may reduce combustion efficiency or cause engine stall/ flame-out.

Integrated airbreathing hypersonic vehicles usually suffer from highly distorted flow profiles at the combustor face, which is known to reduce combustion efficiency substantially and has the effect of reducing the vehicle's range and acceleration capabilities. Also, separated regions induced by strong shock-wave boundary layer interactions during isolator back pressured conditions, especially in isolators with oblique shock train systems, can cause separation zones in the isolator to propagate to the combustor face. These separation zones generally occur on the body-side and centerline of the vehicle where the boundary layer has built-up the thickest and where low momentum flow tends to collect with many high Mach Number inlet design methodologies. This opens-up the possibility for combustion gases to become entrained in the isolator with high potential to cause a burn-through of the isolator. Distorted inlet flow profiles generally have low momentum regions which can reduce the isolator maximum back pressure capability as well.

US 2014/182697 A1 discloses air intakes for supersonic aircraft propulsion systems. The technical result to be achieved is to ensure stable operation of the engine in all flight regimes up to the maximum Mach number of M=3.0 by adjusting the apex angle of stages of one of swept wedges and minimum area of the flow passage of the air intake. An adjustable supersonic air intake comprises an entrance in the form of a flow deceleration system-a supersonic diffuser consisting of two multi-stage swept decelerating wedges and which form a dihedral angle; a shell, which also forms a dihedral angle, all edges of the entrance lying in the same plane; an air intake throat situated downstream of the deceleration system, and a subsonic diffuser, downstream thereof. As seen from the front, the entrance of the air intake has the shape of a rectangle or a parallelogram. The number of stages on swept wedges may be different and the sweep of the wedges may be different from each other and from respective edges of the entrance. With the exception of the first stage, all of the stages of one of the two multi-stage swept wedges are rotatable about an axis situated at the intersection of the first and second stages of the wedge, forming a movable front panel. A movable rear panel is situated in the subsonic diffuser.

### SUMMARY OF THE INVENTION

According to an aspect, the present disclosure provides a flight vehicle comprising: a fuselage; and a propulsion system mechanically coupled to the fuselage; wherein the propulsion system includes: an air inlet; an isolator downstream of the air inlet; and a combustor downstream of the isolator wherein the fuel is added; and wherein the isolator includes a swept-back wedge on an inner-mold-line of the isolator; and wherein in operation a forward part of the wedge produces an oblique shock, and features of the wedge divert boundary-layer and core flow that is close to the surface of the wedge, radially outboard and circumferentially along the walls of the isolator as the flow proceeds axially downstream through the isolator, to improve flow mixing, wherein the features of the wedge are an aft part of the wedge, and, wherein the swept-back wedge is a band around the isolator, with the band angled relative to an axial direction along the isolator, wherein the band is tapered, with the compression angle of the wedge decreasing from a maximum value at a bottom to zero or a non-zero minimum at the aft part of the wedge, along sides of the isolator.

According to a preferred embodiment, the forward part of the wedge is at a bottom-centerline of the isolator; and the aft part of the wedge is along the outboard sides of the isolator.

According to a preferred embodiment, the oblique shock produced at the forward part of the wedge due to back pressure impositions is part of a shock train that also includes an additional oblique shock produced at a location on the isolator that is diametrically opposed to the forward part of the wedge.

According to a preferred embodiment, the forward part of the wedge is at the bottom of the isolator.

According to a preferred embodiment, the wedge has a maximum compression angle at the forward part.

According to a preferred embodiment, the maximum compression angle is 5°-50°.

According to a preferred embodiment, the wedge has a sweep back angle of 20°-75°.

According to a preferred embodiment, the swept-back wedge is flush with walls of the isolator downstream of the wedge, so as to blend in with the downstream wedge shape.

According to a preferred embodiment, a minimum compression angle at an aft part of the wedge is zero.

According to another aspect, the present disclosure provides a method of reducing low energy flow in an isolator of a propulsion system of a flight vehicle, the method comprising: producing an oblique shock at a forward part of a swept-back wedge that is part of the isolator during back pressure demands from the combustor; and turning flow through the isolator using the wedge, wherein the wedge diverts boundary-layer and core flow, radially outboard and circumferentially along walls of the isolator as the flow proceeds axially downstream through the isolator, to thereby improve flow mixing, wherein a shock train of the oblique shocks produced by the swept-back wedge reduces a separation region at the top of the isolator, relative to an isolator not having the swept-back wedge.

According to a preferred embodiment, the method further includes the wedge producing additional weaker shocks.

According to a preferred embodiment, the method includes producing the oblique shock at a bottom of the isolator. According to an embodiment of any paragraph(s) of this summary, turning the flow also includes directing the flow from the bottom and from sides of the isolator, to a top of the isolator.

According to a preferred embodiment, turning the flow includes diverting boundary layer streamlines toward running parallel to or parallel but moving outward conically to a leading edge of the wedge.

According to still another aspect, the present disclosure provides a method of reducing low energy flow in an isolator of a propulsion flowpath of a flight vehicle, the method comprising: setting up swept oblique shocks along the length of a swept-back wedge that is part of the isolator; turning viscous and non-viscous flow outboard and upward with velocity vectors consistent with a geometry of the swept-back wedge and incoming flow conditions; and generating oblique shocks at intersections of the sidewalls of the isolator and the swept-back wedge, to further instigate flow turning upward along the sidewalls.

According to a preferred embodiment, the method further includes flow through the isolator wrapping along the sidewalls and upward within the isolator, thereby reducing a separation zone within the isolator, and mixing in high energy flow with lower energy flow in an upper portion of the isolator.

To the accomplishment of the foregoing and related ends, the invention comprises the features hereinafter fully described and particularly pointed out in the claims. The following description and the annexed drawings set forth in detail certain illustrative embodiments of the invention. Other objects, advantages and novel features of the invention will become apparent from the following detailed description of the invention when considered in conjunction with the drawings.

### BRIEF DESCRIPTION OF DRAWINGS

The annexed drawings, which are not necessarily to scale, show various aspects of the invention.
Fig. 1 is a schematic diagram of a flight vehicle according to an embodiment of the present invention.
Fig. 2 is a schematic diagram showing components of an engine of the flight vehicle of Fig. 1.
Fig. 3 is a side view of an isolator that may be part of the propulsion flowpath of Fig. 2.
Fig. 4 is a plan view of the isolator of Fig. 3.
Fig. 5 is a cutaway side view showing some aspects of flow through the isolator of Fig. 3.
Fig. 6 is a cutaway side view of a prior art isolator.
Fig. 7 is an oblique cutaway view showing streamlines of flow through the prior art isolator of Fig. 6.
Fig. 8 is an oblique cutaway view showing streamlines of flow through the isolator of Fig. 3.
Fig. 9 is an oblique view showing some possible alternate embodiment isolators.
Fig. 10 is an oblique view showing additional alternate embodiment isolators.
Fig. 11 is an oblique view showing some further alternate embodiment isolators.
Fig. 12 is an oblique view showing still another alternate embodiment isolator.

### DETAILED DESCRIPTION

A flight vehicle engine includes an isolator with a swept-back wedge to improve flow mixing. The wedge includes forward shock-anchoring locations, such as edges or rapidly-curved portions, that anchor oblique shocks in situations where the isolator has sufficient back pressure. The swept-back wedge may also create swept oblique shocks along its length. Boundary layer flow streamlines are diverted running parallel to or parallel but moving outward conically to the swept-wedge leading edge moving outboard and upward. This flow may create and propagate vortices as well, which may increase the energy of this flow and folds-in high energy non-viscous flow. The non-viscous flow outside the boundary layer is processed through the swept-back ramp shock and diverted outboard and upward as well, with velocity vectors consistent with the swept-back wedge geometry and incoming flow conditions. The outboard aft portion of the wedge close to and at the sidewall intersection may also induce shocks and divert flow near the walls closer toward the walls, and/or improve flow mixing, such as by diverting the collecting flow that has been directed toward this region upward along the sides of the isolator and toward the top of the isolator, where low-energy flow and/or a flow separation regions may be located.

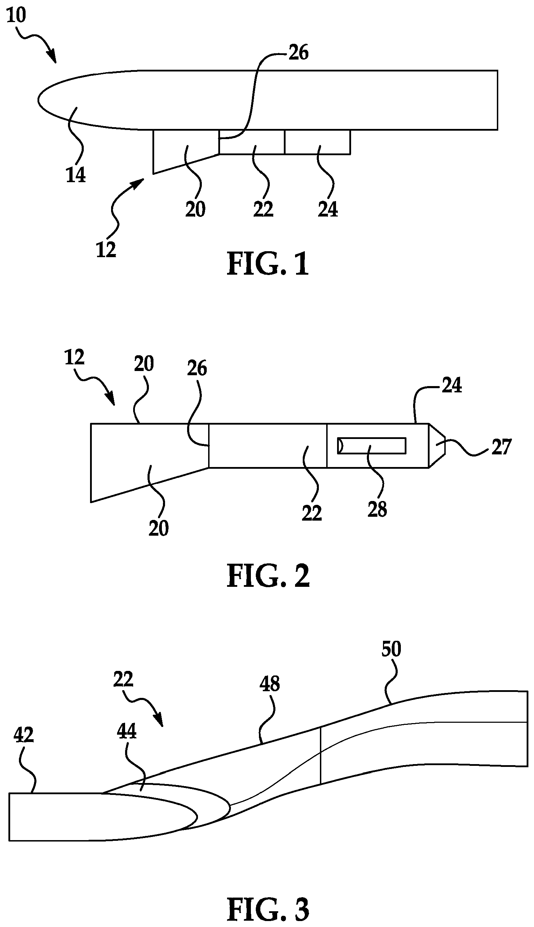

Fig. 1 schematically shows an air vehicle 10 that is powered by a propulsion system 12 that is mechanically coupled to a fuselage 14. The air vehicle 10 may be a missile, projectile, an unmanned aircraft (an unmanned aerial vehicle or UAV), manned aircraft or an access-to-space vehicle. The air vehicle may have any of a variety of sizes, and any of a variety of operating conditions. In much of the description below the air vehicle 10 is described in terms of a high supersonic to hypersonic air vehicle, with a Mach number ranging from 4 to 6, or more broadly with a Mach number of 2 to 25. However the air vehicle 10 may operate at lower supersonic speeds (Mach number greater than one), or even at subsonic speeds.

The propulsion system 12 may be coupled to the fuselage 14 in any of a variety ways, including parts of the propulsion system 12 being integrally formed with parts of the fuselage 14. The fuselage 14 may have any of a variety of suitable shapes, and may include additional components for carrying out one or more operations of the air vehicle 10. Such additional components, to give a few nonlimiting examples, may include control systems (such as for steering), lift-producing and/or control surfaces (such as wings, fins, or canards, either fixed in position or movable in whole or in part), communication systems, cooling systems, sensors or other data-collecting systems, and/or any of a variety of payloads.

With reference in addition to Fig. 2, the propulsion system 12 includes an air inlet 20, an isolator or diffuser 22, and a combustor or engine combustor 24. The air inlet 20 takes in air from the free air stream and compresses the air, with one or more shocks perhaps occurring as the flow is compressed. The compressed air then exits the air inlet 20 to enter into the isolator 22. There may be a throat 26, a minimum area location at the boundary between the air inlet 20 and the isolator 22. The isolator 22 functions to keep the shocks stable, isolates dynamic flow fluctuations between the inlet and engine, provides demanded pressure rises, and/or provides desired flow patterns at its downstream end, where the air passes from the isolator 22 to the combustor or engine 24. In the combustor 24 fuel is added to the air flow, mixed, combustion occurs, and the combusted flow is passed through a nozzle 27, producing thrust from the propulsion system 12, which is used to power the air vehicle 10. Combustion products are exhausted from a downstream end of the combustor 24 through the nozzle 27. The propulsion system 12 thus defines a flowpath or propulsion flowpath through the inlet 20, the isolator 22, the engine combustor 24, and the nozzle 27.

The combustor 24 may be any of variety of suitable devices for burning a fuel-air or fuel-oxidizer mixture and producing thrust. For example the combustor 24 (and/or the engine 12) may be a ramjet, a scramjet, a dual-mode ramjet/scramjet, or perhaps a turbojet. In Fig. 2 the combustor 24 is shown as having a turbine 28, but in many embodiments the combustor 24 has no turbine (or other moving parts).

The inlet 20 may have any of a variety of suitable shapes, for example being round, elliptical, or rectangular. The isolator 22 may have a general shape that makes the transition between a square, rectangular, trapezoidal or elliptical shape of the inlet 20 (to give a few examples) to a round or other-shaped combustor 24. The inlet 20 and the combustor 24 may be in line with each other, or may be offset from one another and at different angular orientations.

Figs. 3-5 shows further detail of an embodiment of the isolator 22. The isolator 22 has an S shape, with an inlet of the isolator 22 offset from an outlet of the isolator 22. The isolator 22 has (from upstream to downstream) an entrance region 42, a swept-back wedge 44, an isolator shape change and up-turn region 48, and a mix-out subsonic region 50. The region 50 may be one of subsonic flow during moderate to high back pressure operation, and may be supersonic otherwise. The illustrated isolator 22 sweeps upward from its entrance to its exit, but it will be appreciated that the isolator 22 may have any of a variety of other shapes, shape with no offset at all. In the description below there is reference to a top of the isolator 22, a bottom of the isolator 22, and sides of the isolator 22. However these references are to some extent arbitrary, and may correspond only to the illustrated embodiment.

The swept-back wedge 44 on the bottom of the isolator 22 is a ramped portion of the wall of the isolator 22 and is configured to compress the flow to generate and anchor shocks at desired locations, and to turn some of the flow through the isolator 22 to encourage flow mixing and reduce separation regions throughout the isolator 22. Weaker shocks can setup parallel to the wedge 44 across the entire length of it, providing further anchoring. In the illustrated embodiment the wedge 44 is a band that stretches around a perimeter of the wall of the isolator 22, with the band being angled so as to be axially forward (closer to the upstream inlet) at the top on the symmetry plane of the isolator 22, and axially farther back (farther from the upstream inlet) at the sides of the isolator 22. A bottom part 52 of the wedge 44 acts as a shock generator and an anchor point 54 for strong oblique shocks within the isolator 22 when moderate to high pressure rises are demanded by the combustor 24. At the top of the isolator 22 an oblique shock is located at 56.

The angle of the wedge 44 at the bottom of the isolator 22 may be chosen to achieve the desired amount of compression. This compression sets up a shock train 60 to meet the demand. The compression surfaces of the wedge 44 divert boundary layer as well as high energy core flow that is near the isolator bottom surface to flow outboard and upward which reduces the size of a separation region 62, caused by the forward-most oblique shock, in which flow separates from the wall of the isolator 22, and recirculates therein. The band 44 may have varying wedge angles along its perimeter with the steepest angles in the center (at the bottom of the isolator 22 and this angle approaching zero as one moves outboard toward the bands widest parts 64 to the sidewalls. The bottom (forward) part 52 sets up a strong oblique shock, and the remainder of the wedge 44 diverts boundary-layer and some core flow (close to the boundary layer) outboard to the isolator sidewalls, to improve flow mixing. The swept-back wedge 44 may be flush with walls of the isolator 22 downstream of the wedge 44, so as to blend in with the downstream wedge shape. Alternatively there may be a discontinuity, such as a step, on the downstream side of the wedge 44. Such a discontinuity may be used to set up a desired shock orientation to re-orient velocity vectors, diverting or directing the flow as desired.

The band 44 is tapered from the bottom 52 to the sides, with the compression angle of the wedge (the amount of compression) decreasing from a maximum value to zero (or a non-zero minimum). The (maximum) wedge compression angle may be 10°-30°, or more broadly 5°-50°, to give some (nonlimiting) values. As an alternative to the use of a band, there may be wedges at discrete locations around a perimeter of the isolator, at different axial stations. As yet another additional alternative, the band along the top of the isolator only acts as an expansion surface, and can be blended into the surrounding geometry of the isolator 22. As yet another additional alternative, the band 44 may be have a constant compression wedge 44 angle across the entire surface at the bottom 52 of the isolator 22.

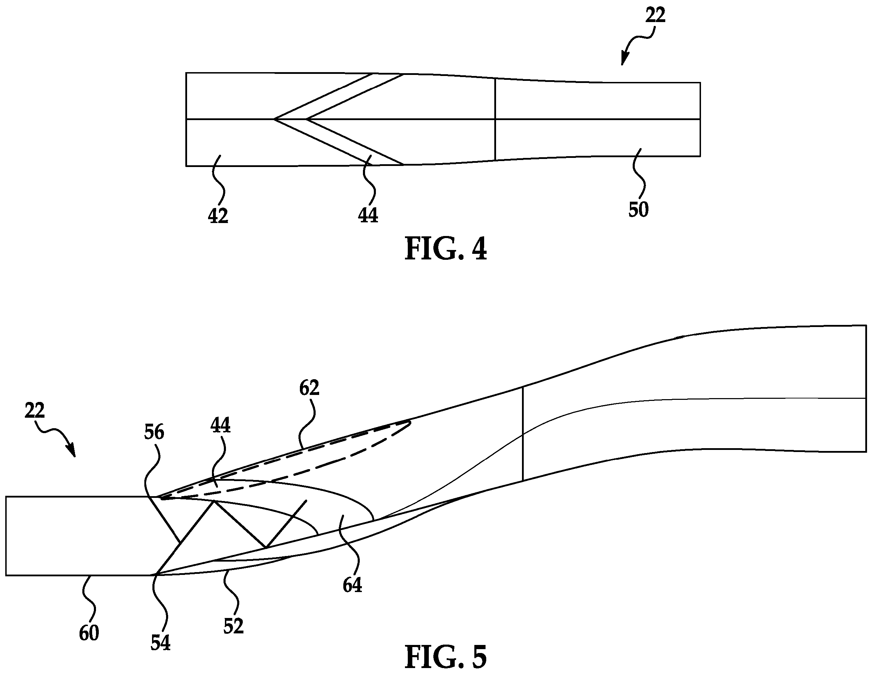

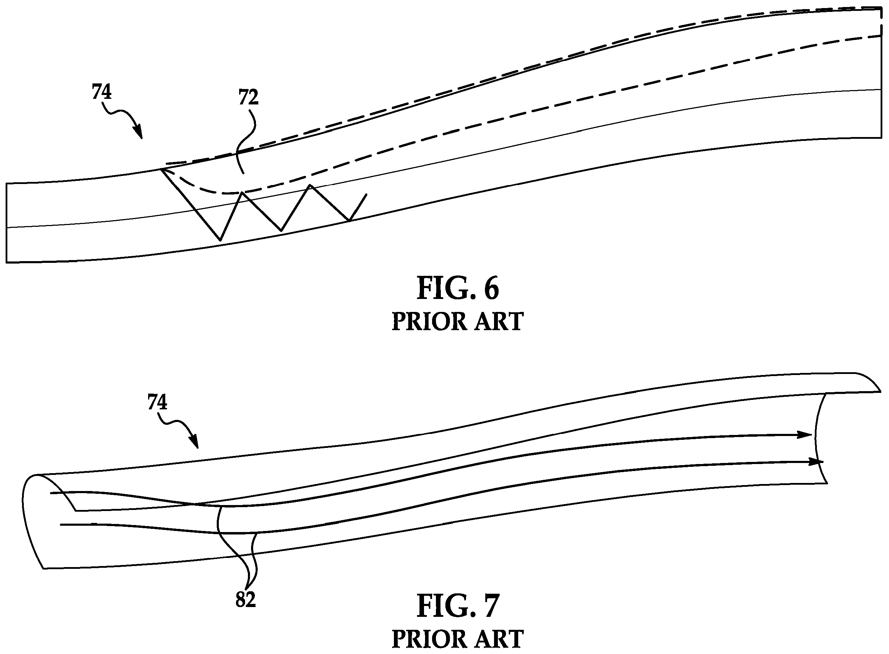

With reference now to Fig. 6, the separation region 62 (Fig. 5) is contrasted with a much larger separation region 72 in a prior art isolator 74 that lacks the swept-back wedge 44 (Fig. 3) and other features of the isolator 22 (Fig. 3). Bifurcated isolator flows (low and high momentum flow splits) may occur at back pressured conditions due to either large S-duct heights, large isolator aspect ratios, large shape change requirements, too short of isolators, distorted inflows (in velocity vectors and/or mass flux), large or non-uniform boundary layer thickness inflows, inflow Mach Number and shock train structure, etc. The low energy flow on the top-half of the duct, such as in the separation region 72, can lead to reduced engine performance or burn-back of combustion gases in the isolator 22. Thus it is advantageous to reduce the separation region by flow diversion to instigate mixing and stop the propagation of the separation 72 region down the length of the isolator 22 early, in order to improve performance.

Features at the bottom of the isolator 22 help improve the desirable flow mixing. The wedge 44 has a drastically increasing geometry slope, with discrete or continuous but rapid geometry changes that create a swept compression ramp. This wedge 44, when placed correctly axially, with the right sweep angle and shock wedge angle, greatly increases flow upwash of the high energy flow around the inner-mold-line of the isolator 22. The swept feature also rolls more high energy flow toward the wall due to the large pressure gradients imposed by the swept shocks. This flow is subsequently deflected upwards, again increasing upwash. Duct shaping, when positioned correctly, creates a "whip" effect on the flow as well, further improving upwash. This shaping is accomplished by tailoring the swept-back wedge to sidewall geometry intersection and by a drastic duct height increase by either following the tangent angle at the downstream-end of the swept-back compression wedge or by further increasing the instantaneous upward angle of the isolator 22 immediately downstream of the swept-back wedge 44. Cross-sectional area distributions along the length of the isolator may be monotonically increasing, or alternatively these diffusion rates may be tailored along the length to achieve other specific goals. All of this upwash translates down the isolator 22 (in the direction downstream) and results in colliding of different flow streams and mixing with the low energy or separated flow that is present in the top or side portions of the isolator 22.

The wedge 44 may set up swept oblique shocks along its length. This may produce turning of the viscous and non-viscous flow outboard and upward with velocity vectors consistent with the swept-back wedge geometry and incoming flow conditions. Further, there may be generating of oblique shocks at intersections of sidewalls of the isolator and the swept-back wedge, further instigating flow turning upward along the sidewalls. Flow through the isolator 22 may be pushed from inboard locations outboard and wrap along the sidewalls and upward within the isolator 22, thereby reducing the separation zone within the isolator 22, and may mix in high energy flow with lower energy flow in an upper portion of the isolator 22.

The improved mixing and removal of the majority of flow separations due to the tailored isolator geometry reduces losses, allowing the isolator to reach higher back pressures. The ability of the features to create stronger shock anchoring at high back pressures also improves the maximum back pressure capability.

Bifurcated flows with low/high momentum flow disparities from top to bottom caused by oblique shock trains generally have separated flow regions in the low momentum regions, especially in highly constrained systems where isolator length is low or S-duct height is high and separations cannot be avoided. The above-mentioned geometric features that create upwash of the high energy flow around the circumference remove this separation and mitigate the potential of entraining combustion products from the engine into the isolator and subsequently burning through the isolator.

Oblique shocks are mentioned herein. It will be appreciated that normal shocks may also occur in some places as an alternative to oblique shocks.

Tailored isolator inner-mold-line geometry shaping encourages shock anchoring which improves off-design performance and consistency by keeping the shock train positioning consistent across a wide range of flight conditions and throttle (back pressure demand) settings. Also, the low momentum and separated regions in typical isolators change location and size based on operating condition, throttle setting and in time (transient conditions), all of which lead to distortion pattern changes at the combustor entrance which may reduce combustion efficiency if an active fuel injection scheme is not incorporated. Removing these variations by mixing-out the low energy flow regions improves consistency across the flight envelope and throttle settings and either simplifies the engine or improves combustion efficiency, both of which increase specific impulse (fuel efficiency) and/ or thrust at a given throttle setting.

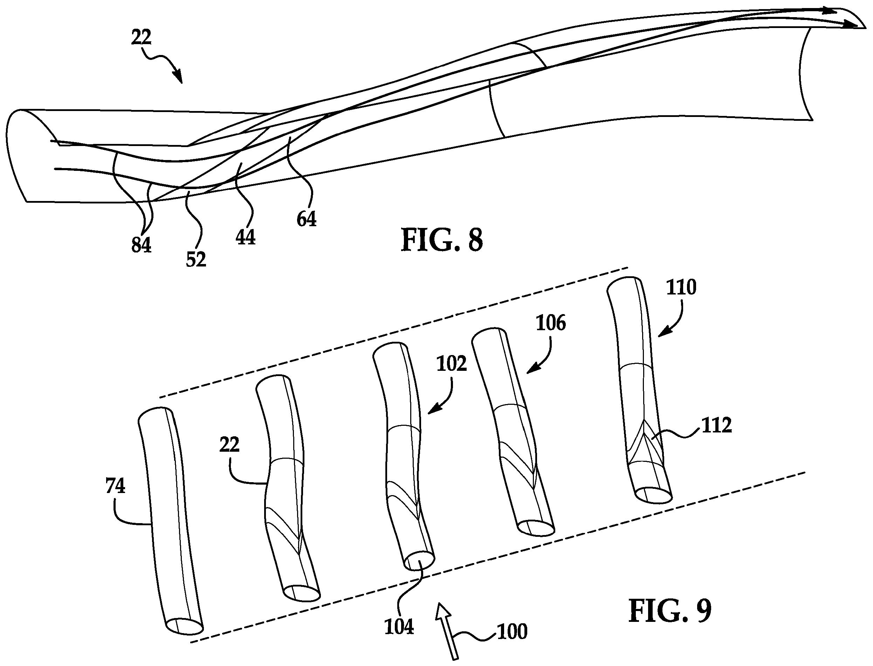

Figs. 7 and 8 show streamlines for flow in a prior art isolator 74 (Fig. 7) and in an isolator 22 (Fig. 8) of the present invention. In the prior art isolator the streamlines 82 do not move much after they are processed through the initial shock in the back pressured oblique shock train. The low energy flow stays toward the top of the isolator 74 after the first (upstream) oblique shock separates flow from the top. High energy flow is pushed down by the oblique shock and stays toward the bottom of the isolator 74.

In the isolator 22 (Fig. 8) high energy flow streamlines, after the initial back pressure imposed oblique shock, near the isolator walls are deflected upward by oblique shocks anchored at the wedge 44. The wedge 44 also pushes high energy flow along the bottom surface from the centerline toward the side walls of the isolator 22. Downstream of the wedge 44 the flow, indicated by the streamlines 84, moves upward along the side walls, toward the top of the isolator 22. The diverted high-energy flow reduces in size (or eliminates) the separation region, which reduces this flow constriction on the top-side of the isolator 22 and allows high energy flow on the bottom-side to diffuse with the top flow more freely. The Mach Number of the flow can also be reduced more rapidly with the separation constriction gone to improve mixing as well. The diverted flow also mixes with the low-energy flow at the top of the isolator 22 to create a more uniform flow.

Figs. 9-12 show some alternative embodiments, with different specific features than those of the isolator 22 (Fig. 3). In each of Figs. 9-12 a prior art isolator 74 is shown along with the various alternate invention embodiments.

Fig. 9 shows some general variations in configuration, with a flow direction shown at 100. The prior art isolator 74 is shown, as is the isolator 22. An isolator 102 has a cylindrical entrance 104. An isolator 106 has a minimal-bend S shape, with less of an offset distance between axes of the inlet and exit. An isolator 110 has a reversed V-wedge 112 swept back wedge, with the forward parts of the wedge at the sides and the aft parts of the wedge at the top and bottom. This configuration has the potential to improve isolator exit distortion for inlet configurations that create bottom-side centerline low-energy regions or configurations where the oblique shock train forward-most foot is located on the bottom-side of the isolator. The reversed V-wedge 112 would divert flow from the sides to this region.

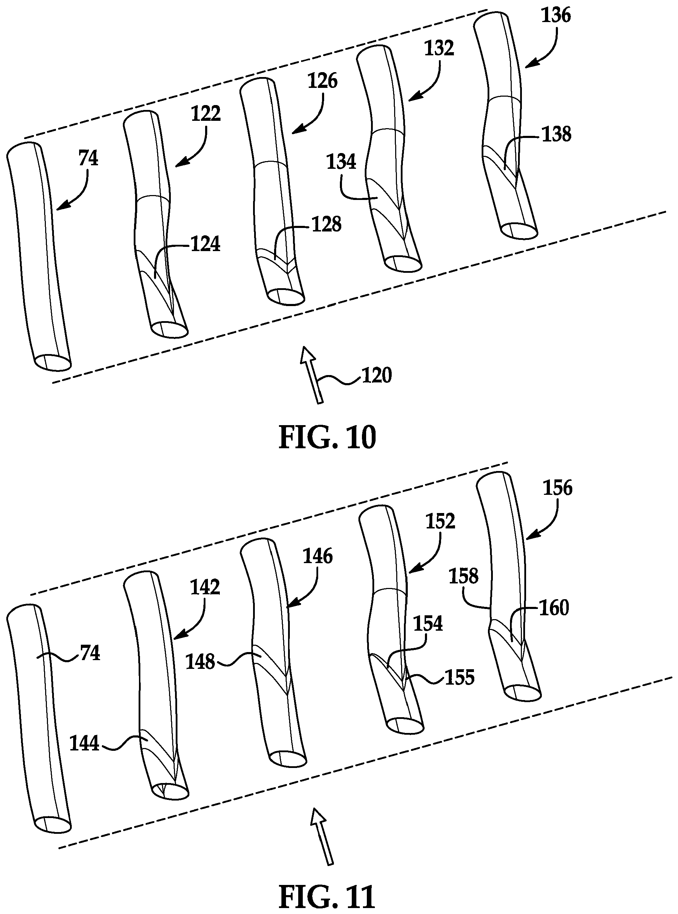

Fig. 10 shows isolators that have some variations in the wedge configurations relative to the configuration shown in the isolator 22 (Fig. 3), along with the prior art isolator 74. A flow direction is shown at 120. An isolator 122 has an increased sweep angle of 75° on its wedge 124, while an isolator 126 has a decreased sweep angle of 45° on its wedge 128. These angles are relative to a flow direction, the axial direction along the length of the isolator 122. Sweep angle selection is a strong function of the propagating inlet shock train, velocity vectors and/or momentum distribution of this inflow, shear stresses, percent of normal shock the isolator is required to handle, S-duct height, isolator shape change required, isolator length, etc. Sweep back angles may be selected for desired performance, for example being 45°-65°, or 20°-75°, although other values are possible. An isolator 132 has a wedge 134 with an increased wedge angle (increased angling of the surface toward an axis of the isolator 132). An isolator 136 has a wedge 138 with a decreased wedge angle. The wedge angle or angles may be selected based on a number of factors (such as those listed above with regard to sweep angle), or to achieve any of a variety of effects.

Fig. 11 shows some possible variations in the placement of the wedge, and or in wedge and/or wall geometry configuration, with a flow direction shown at 150. The isolator 74 is the same prior art isolator shown in other figures. The isolator 142 has a wedge 144 that is shifted toward an entrance of the isolator 142, while the isolator 146 has an aft-shifted wedge 148. Axial positioning may be selected as a function of the factors described earlier with regard to wedge angle. A wedge may be located 1-2 hydraulic diameters from the entrance, or more broadly 0-4 hydraulic diameters from the entrance. The isolator 152 has a wedge 154 that has a rounded forward surface 155 over at least part of its circumference. This contrasts with a sharp edge that other wedges may have. It will be appreciated that a fillet may be as effective as a sharp edge in creating shocks, anchoring shocks and diverting the flow as intended.

Fig. 11 also shows an isolator 156 with sidewall compression, a narrowed diameter region 158 that is downstream of a swept back wedge ramp 160. This type embodiment may improve flow deflection toward the center and could be tailored to improve flow deflection upward as well.

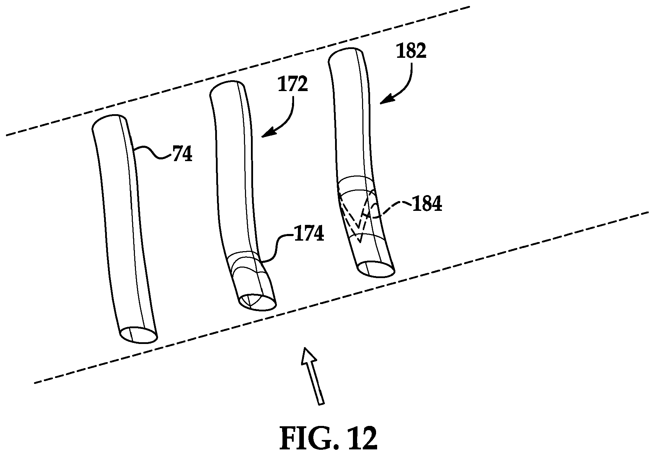

Fig. 12 shows the prior art isolator 74 and an isolator 172 that has a sidewall only sweep wedge 174. Both sidewalls contain a swept-back wedge with the forward-most location toward the bottom-side of the isolator and a sweep-back proceeding upward and aft. This embodiment may provide the same benefits via similar flow physics via diverting bottom surface sidewall flow directly to the top surface. Shock anchoring may not be as strong as in some other embodiments, but flow mixing may be improved.

Fig. 12 also shows an isolator 182 that has a wedge 184 only over part of the circumference of the isolator 182. In the illustrated embodiment the wedge 184 is only along the bottom and sides of the isolator 182, but does not extend to the top of the isolator 182.

Further variations are possible. For example, all of the illustrated embodiment isolators have constant areas and constant cross-sections in the forward portion, before the swept-back wedge. This is not necessary or required, and other embodiments may have a different configuration.

## Claims

1. A flight vehicle (10) comprising:
a fuselage (14); and
a propulsion system (12) mechanically coupled to the fuselage;
wherein the propulsion system includes:
an air inlet (20);
an isolator (22) downstream of the air inlet; and
a combustor (24) downstream of the isolator where fuel is added; and
wherein the isolator includes a swept-back wedge (44) on an inner-mold-line of the isolator; and
wherein in operation a forward part (52) of the wedge produces an oblique shock, and features of the wedge divert boundary-layer and core flow that is close to a surface of the wedge, radially outboard and circumferentially along the walls of the isolator as the flow proceeds axially downstream through the isolator, to improve flow mixing,
wherein the features of the wedge are an aft part of the wedge,
wherein the swept-back wedge is a band (44) around the isolator, with the band angled relative to an axial direction along the isolator, and
wherein the band is tapered, with the compression angle of the wedge decreasing from a maximum value at a bottom to zero or a non-zero minimum at the aft part of the wedge, along sides of the isolator.

2. The flight vehicle of claim 1,
wherein the forward part of the wedge is at a bottom-centerline of the isolator; and
wherein the aft part of the wedge is along the outboard sides of the isolator.

3. The flight vehicle of any of claims 1 to 2, wherein the oblique shock produced at the forward part of the wedge due to back pressure impositions is part of a shock train that also includes an additional oblique shock produced at a location on the isolator that is diametrically opposed to the forward part of the wedge.

4. The flight vehicle of any of claims 1 to 3, wherein the forward part of the wedge is at the bottom of the isolator.

5. The flight vehicle of claim 4, wherein the wedge has a maximum compression angle at the forward part.

6. The flight vehicle of claim 5, wherein the maximum compression angle of the wedge is 5°-50°.

7. The flight vehicle of any of claims 1 to 6, wherein the wedge has a sweep back angle of 20°-75°; and/or
wherein the swept-back wedge is flush with walls of the isolator downstream of the wedge, so as to blend in with the downstream wedge shape.

8. A method of reducing low energy flow in an isolator (22) of a propulsion system (12) of a flight vehicle (10), the method comprising:
producing an oblique shock at a forward part (52) of a swept-back wedge (44) that is part of the isolator during back pressure demands from the combustor (24); and
turning flow through the isolator using the wedge, wherein the wedge diverts boundary-layer and core flow, radially outboard and circumferentially along walls of the isolator as the flow proceeds axially downstream through the isolator, to thereby improve flow mixing,
wherein a shock train of the oblique shocks produced by the swept-back wedge reduces a separation region at the top of the isolator, relative to an isolator not having the swept-back wedge.

9. The method of claim 8, further comprising the wedge anchoring a leading back-pressure imposed oblique shock; and
preferably, further comprising the wedge producing additional weaker shocks.

10. The method of claim 8 or claim 9,
wherein the producing includes producing the oblique shock at a bottom of the isolator; and
wherein the turning the flow also includes directing the flow from the bottom and from sides of the isolator, to a top of the isolator; and
preferably, wherein the turning the flow includes diverting boundary layer streamlines toward running parallel to or parallel but moving outward conically to a leading edge of the wedge.

11. A method of reducing low energy flow in an isolator (22) of a propulsion flowpath of a flight vehicle (10), the method comprising:
setting up swept oblique shocks along the length of a swept-back wedge (44) that is part of the isolator;
turning viscous and non-viscous flow outboard and upward with velocity vectors consistent with a geometry of swept-back wedge and incoming flow conditions; and
generating oblique shocks at intersections of sidewalls of the isolator and the swept-back wedge, to further instigate flow turning upward along the sidewalls.

12. The method of claim 11, further comprising wrapping flow through the isolator along the sidewalls and upward within the isolator, thereby reducing a separation zone within the isolator, and mixing in high energy flow with lower energy flow in an upper portion of the isolator.

## Patentansprüche

1. Flugkörper (10), umfassend:
einen Rumpf (14); und
ein Antriebssystem (12), das mechanisch mit dem Rumpf gekoppelt ist;
wobei das Antriebssystem beinhaltet:
einen Lufteinlass (20);
einen Isolator (22) stromabwärts des Lufteinlasses; und
eine Brennkammer (24) stromabwärts des Isolators, in der Brennstoff zugeführt wird; und
wobei der Isolator einen nach hinten gepfeilten Keil (44) an einer Innenkontur des Isolators beinhaltet; und
wobei im Betrieb ein vorderer Teil (52) des Keils einen schrägen Stoß erzeugt und Merkmale des Keils eine Grenzschicht- und Kernströmung, die sich nahe einer Oberfläche des Keils befindet, radial nach außen und in Umfangsrichtung entlang der Wände des Isolators ablenken, während die Strömung axial stromabwärts durch den Isolator weiterströmt, um die Strömungsvermischung zu verbessern,
wobei die Merkmale des Keils ein hinterer Teil des Keils sind,
wobei der nach hinten gepfeilte Keil ein um den Isolator herum verlaufendes Band (44) ist und das Band relativ zu einer axialen Richtung entlang des Isolators abgewinkelt ist und
wobei das Band sich verjüngt und der Kompressionswinkel des Keils von einem Maximalwert an einer Unterseite bis auf null oder ein Nicht-Null-Minimum an dem hinteren Teil des Keils entlang Seiten des Isolators abnimmt.

2. Flugkörper nach Anspruch 1,
wobei sich der vordere Teil des Keils an einer unteren Mittellinie des Isolators befindet; und
wobei der hintere Teil des Keils entlang der Außenseiten des Isolators verläuft.

3. Flugkörper nach einem der Ansprüche 1 bis 2, wobei der an dem vorderen Teil des Keils aufgrund von Rückdruckbeaufschlagungen erzeugte schräge Stoß Teil einer Stoßkette ist, die auch einen zusätzlichen schrägen Stoß beinhaltet, der an einer Stelle an dem Isolator, die dem vorderen Teil des Keils diametral gegenüberliegt, erzeugt wird.

4. Flugkörper nach einem der Ansprüche 1 bis 3, wobei sich der vordere Teil des Keils an der Unterseite des Isolators befindet.

5. Flugkörper nach Anspruch 4, wobei der Keil an dem vorderen Teil einen maximalen Kompressionswinkel aufweist.

6. Flugkörper nach Anspruch 5, wobei der maximale Kompressionswinkel des Keils 5°-50° beträgt.

7. Flugkörper nach einem der Ansprüche 1 bis 6, wobei der Keil einen Pfeilwinkel nach hinten von 20°-75° aufweist; und/oder wobei der nach hinten gepfeilte Keil stromabwärts des Keils bündig mit Wänden des Isolators abschließt, um so in die stromabwärts gelegene Keilform überzugehen.

8. Verfahren zum Reduzieren einer Niedrigenergieströmung in einem Isolator (22) eines Antriebssystems (12) eines Flugkörpers (10), das Verfahren umfassend:
Erzeugen eines schrägen Stoßes an einem vorderen Teil (52) eines nach hinten gepfeilten Keils (44), der Teil des Isolators ist, während Rückdruckbeanspruchungen durch die Brennkammer (24); und Umlenken einer Strömung durch den Isolator unter Verwendung des Keils, wobei der Keil eine Grenzschicht- und Kernströmung radial nach außen und in Umfangsrichtung entlang Wänden des Isolators ablenkt, während die Strömung axial stromabwärts durch den Isolator weiterströmt, um dadurch die Strömungsvermischung zu verbessern,
wobei eine Stoßkette der durch den nach hinten gepfeilten Keil erzeugten schrägen Stöße einen Ablösebereich an der Oberseite des Isolators im Vergleich zu einem Isolator, der den nach hinten gepfeilten Keil nicht aufweist, reduziert.

9. Verfahren nach Anspruch 8, ferner umfassend ein Verankern eines führenden rückdruckbeaufschlagten schrägen Stoßes durch den Keil; und
vorzugsweise ferner umfassend ein Erzeugen zusätzlicher schwächerer Stöße durch den Keil.

10. Verfahren nach Anspruch 8 oder Anspruch 9,
wobei das Erzeugen ein Erzeugen des schrägen Stoßes an einer Unterseite des Isolators beinhaltet; und
wobei das Umlenken der Strömung auch ein Leiten der Strömung von der Unterseite und von Seiten des Isolators zu einer Oberseite des Isolators beinhaltet; und
wobei vorzugsweise das Umlenken der Strömung ein Ablenken von Grenzschichtstromlinien dahingehend beinhaltet, dass diese parallel zu einer Vorderkante des Keils verlaufen oder parallel zu dieser verlaufen, sich jedoch konisch nach außen bewegen.

11. Verfahren zum Reduzieren einer Niedrigenergieströmung in einem Isolator (22) eines Antriebsströmungspfads eines Flugkörpers (10), das Verfahren umfassend:
Ausbilden von gepfeilten schrägen Stößen entlang der Länge eines nach hinten gepfeilten Keils (44), der Teil des Isolators ist;
Umlenken einer viskosen und nicht viskosen Strömung nach außen und nach oben mit Geschwindigkeitsvektoren entsprechend einer Geometrie des nach hinten gepfeilten Keils und Anströmbedingungen; und
Generieren von schrägen Stößen an Schnittpunkten von Seitenwänden des Isolators und des nach hinten gepfeilten Keils, um ein weiteres Umlenken der Strömung nach oben entlang der Seitenwände anzuregen.

12. Verfahren nach Anspruch 11, ferner umfassend ein Herumführen einer Strömung durch den Isolator entlang der Seitenwände und nach oben innerhalb des Isolators, dadurch Reduzieren einer Ablösezone innerhalb des Isolators und Vermischen einer Hochenergieströmung mit einer Niedrigenergieströmung in einem oberen Abschnitt des Isolators.

## Revendications

1. Véhicule volant (10) comprenant :
un fuselage (14) ; et
un système de propulsion (12) couplé mécaniquement au fuselage ;
dans lequel le système de propulsion inclut :
une entrée d'air (20) ;
un isolateur (22) en aval de l'entrée d'air ; et
une chambre de combustion (24) en aval de l'isolateur où le carburant est ajouté ; et
dans lequel l'isolateur comprend un coin en flèche (44) sur une ligne de moule intérieure de l'isolateur ; et
dans lequel, en fonctionnement, une partie avant (52) du coin produit un choc oblique, et les caractéristiques du coin dévient l'écoulement de la couche limite et de cœur qui se trouve près d'une surface du coin, radialement vers l'extérieur et circonférentiellement le long des parois de l'isolateur à mesure que l'écoulement se poursuit axialement en aval à travers l'isolateur, afin d'améliorer le mélange de l'écoulement,
dans lequel les caractéristiques du coin constituent une partie arrière du coin,
dans lequel le coin en flèche est une bande (44) autour de l'isolateur, la bande étant inclinée par rapport à une direction axiale le long de l'isolateur, et
dans lequel la bande est conique, l'angle de compression du coin diminuant d'une valeur maximale à la base à zéro ou à un minimum non nul à l'arrière du coin, le long des côtés de l'isolateur.

2. Véhicule volant selon la revendication 1,
dans lequel la partie avant du coin se situe sur un axe central inférieur de l'isolateur ; et
dans lequel la partie arrière du coin se trouve le long des côtés extérieurs de l'isolateur.

3. Véhicule volant selon l'une quelconque des revendications 1 à 2, dans lequel le choc oblique produit à la partie avant du coin en raison des impositions de contre-pression fait partie d'un train de chocs qui comprend également un choc oblique supplémentaire produit à un emplacement sur l'isolateur diamétralement opposé à la partie avant du coin.

4. Véhicule volant selon l'une quelconque des revendications 1 à 3, dans lequel la partie avant du coin est au bas de l'isolateur.

5. Véhicule volant selon la revendication 4, dans lequel le coin a un angle de compression maximale dans la partie avant.

6. Véhicule volant selon la revendication 5, dans lequel l'angle de compression maximale du coin est de 5° à 50°.

7. Véhicule volant selon l'une quelconque des revendications 1 à 6, dans lequel le coin présente un angle de flèche arrière de 20° à 75° ; et/ou
dans lequel le coin en flèche est aligné avec les parois de l'isolateur en aval du coin, de manière à se fondre avec la forme du coin en aval.

8. Procédé de réduction du flux de faible énergie dans un isolateur (22) d'un système de propulsion (12) d'un véhicule volant (10), le procédé comprenant :
la production d'un choc oblique sur une partie avant (52) d'un coin en flèche (44) qui fait partie de l'isolateur lors des demandes de contre-pression de la chambre de compression (24) ; et
la déviation du flux à travers l'isolateur à l'aide du coin, dans lequel le coin dévie le flux de la couche limite et le flux central, radialement vers l'extérieur et circonférentiellement le long des parois de l'isolateur alors que le flux se poursuit axialement en aval à travers l'isolateur, afin d'améliorer ainsi le mélange du flux,
dans lequel un train d'ondes de choc obliques produites par le coin en flèche réduit une zone de séparation au sommet de l'isolateur, par rapport à un isolateur ne comportant pas de coin en flèche.

9. Procédé selon la revendication 8, comprenant en outre le coin ancrant un choc oblique imposé par une contre-pression initiale ; et
de préférence, comprenant en outre le coin produisant des chocs supplémentaires plus faibles.

10. Procédé selon la revendication 8 ou la revendication 9, dans lequel la production inclut la production du choc oblique à la base de l'isolateur ; et
dans lequel le détournement du flux comprend également la direction du flux provenant du bas et des côtés de l'isolateur vers le haut de celui-ci ; et
de préférence, dans lequel la déviation du flux inclut la déviation des lignes de courant de la couche limite vers des trajectoires parallèles à un bord d'attaque du coin, ou parallèles mais se déplaçant de manière conique vers l'extérieur par rapport à ce bord.

11. Procédé de réduction du flux de faible énergie dans un isolateur (22) d'un circuit de propulsion d'un véhicule volant (10), le procédé comprenant :
mise en place de chocs obliques en flèche le long d'un coin en flèche (44) qui fait partie de l'isolateur ;
la déviation d'écoulements visqueux et non visqueux vers l'extérieur et vers le haut avec des vecteurs de vitesse compatibles avec une géométrie de coin en flèche et des conditions d'écoulement incident ; et
la génération de chocs obliques à des intersections de parois latérales de l'isolateur et du coin en flèche, afin de provoquer davantage un flux remontant le long des parois latérales.

12. Procédé selon la revendication 11 comprenant en outre l'enroulement du flux à travers l'isolateur le long des parois latérales et vers le haut à l'intérieur de l'isolateur, réduisant ainsi une zone de séparation à l'intérieur de l'isolateur, et le mélange d'un flux à haute énergie avec un flux à plus faible énergie dans une partie supérieure de l'isolateur.
